# EUROPEAN PATENT APPLICATION

(11) **EP 3 136 356 A1**
(43) Date of publication of application: **01.03.2017**
(21) Application number: 15783514.1
(22) Date of filing: 22.04.2015
(51) Int. Cl.: G07D 9/00, G06Q 20/18

(54) **AUTOMATIC TRANSACTION DEVICE AND AUTOMATIC TRANSACTION SYSTEM**

(30) Priority: 25.04.2014 JP 2014090861
(71) Applicant: Hitachi-Omron Terminal Solutions, Corp., Tokyo 141-8576 (JP)
(72) Inventor: SHIBATA Yusuke, Tokyo 141-8576 (JP); ISHIKAWA Tomoyoshi, Tokyo 141-8576 (JP); OKABE Kosei, Tokyo 141-8576 (JP); MIZUNO Eiji, Tokyo 141-8576 (JP); OGATA Hisao, Tokyo 141-8576 (JP)
(74) Representative: MERH-IP Matias Erny Reichl Hoffmann Patentanwälte PartG mbB
(86) International application number: PCT/JP2015/062171
(87) International publication number: WO 2015/163340

(57) **Abstract**

The present invention ensures safety and validity, during generation of encryption keys required for encrypted communication between an overall control unit for an automatic transaction device and an internal device. An automatic transaction device comprising a first device mounted internally and a control unit that controls devices sends and receives data between said first device and the control unit. The first device executes processing that generates a first code relating to the first device and sends same to the control unit and executes processing that verifies a second code received from the control unit and generates an encryption key in accordance with the verification results. The control unit executes: processing whereby, after the first code has been received, verification is made that the operation environment is within the automatic transaction device; and processing whereby, if a determination is made that the operation environment is within the automatic transaction device, a second code is generated and sent to the first device.

## Description

### TECHNICAL FIELD

The present invention relates to an automatic transaction device and an automatic transaction system.

### BACKGROUND ART

In an automatic transaction device such as an automated teller machine (ATM), it may happen that unauthorized processing is executed by an unauthorized command being transmitted to an internal device constituting the automatic transaction device. For example, cash may be withdrawn when an unauthorized withdrawal command which has nothing to do with an actual transaction is sent to a banknote processing unit that handles deposit and withdrawal of banknotes. As a countermeasure to prevent unauthorized processing of this kind, encryption processing is executed so as to protect communications between an overall control unit and the internal device of the automatic transaction device.

The encryption processing requires an encryption key. When the encryption key is not properly managed, protection of the communications by an encryption feature cannot be expected even when an encryption algorithm whose safety is authenticated by a third party is adopted. Accordingly, there is a need of secure encryption key management (specification of the encryption key, etc.) for each of the overall control unit and the internal device(s) of the automatic transaction device.

As a scheme of specifying an encryption key in an automatic transaction device, the patent literature 1 discloses a scheme in which a secret key is specified in advance in an automatic transaction device and an encryption key is decrypted by a master key encrypted by a host system connected to the automatic transaction device via a network.

### CITATION LIST

### PATENT LITERATURE

PATENT LITERATURE 1: United States Patent No. 6,705,517

### SUMMARY OF INVENTION

### TECHNICAL PROBLEM

When the configuration disclosed in the patent literature 1 is adopted between the ATM control unit and an internal device mounted inside of the ATM, encryption and decryption of communications between the ATM control unit and the internal device is realized by executing processing such that a secret key is specified in advance in the internal device and a communication encryption key that has been encrypted by the ATM control unit is decrypted by the secret key so as to ensure that the communication encryption key is only shared between the ATM control unit and the internal device.

However, in a case where encrypted communications are executed and in a case where communications with the internal device is to be protected for an automatic transaction device for which no encryption key is specified using an encrypted communication feature, when an external terminals (laptop PC, etc.) whose environment is configured to be identical to the overall control unit of the automatic transaction device is connected to the internal device of the automatic transaction device, then the encryption key necessary for encryption communications with the internal device is created by and saved on the side of the external terminal. The external terminals in which the encryption key is saved and the internal device of the currently operating automatic transaction device are interconnected, the external terminal is allowed to transmit an unauthorized command, which may lead to execution of unauthorized processing.

Particularly, when an encryption key is to be specified in an ATM installed in a place other than a place where security is physically guaranteed (a place with access management function), it is unrealistic in terms of man-hours, costs, and service stoppage period to transport the ATM to a place where the security is physically guaranteed to specify the key. As a consequence, it is necessary to specify the encryption key in the place where the ATM is installed.

In order to address the above-identified problem, safety and validity of the environment where an encryption key is to be generated needs to be guaranteed as a valid ATM. In view of the above, an object of the present invention is to guarantee safety and validity in generation of an encryption key necessary for encryption communications between the overall control unit and the internal device of the automatic transaction device.

### SOLUTION TO PROBLEM

In order to solve the above-identified problem, the present invention is an automatic transaction device comprising a first device mounted internally and a control unit configured to control devices, wherein transmission and reception of data are performed between the first device and the control unit. The first device is configured to execute a process of generating a first code relating to the first device and transmitting the first code to the control unit, and a process of performing verification of a second code received from the control unit and generating an encryption key in accordance with a result of the verification. The control unit is configured to execute a process of performing verification regarding the fact that an operation environment exists in the automatic transaction device after reception of the first code and a process of generating the second code and transmitting the second code to the first device in response to it having been determined that the operation environment exists in the automatic transaction device.

### ADVANTAGEOUS EFFECTS OF INVENTION

In accordance with the present invention, it is made possible to guarantee safety and validity in generation of the encryption key necessary for the encryption communications between the overall control unit and the internal device of the automatic transaction device. Particularly, it is made possible to ensure that unauthorized processing cannot be made from an external terminal by ensuring safety and validity in a case where an encryption key is to be newly specified for an automatic transaction device for which no encryption key is specified.

### BRIEF DESCRIPTION OF DRAWINGS

[FIG. 1] FIG. 1 is an overall configuration diagram of an automatic transaction system in accordance with an Embodiment 1.
[FIG. 2] FIG. 2 is a functional block diagram of an ATM in accordance with the Embodiment 1.
[FIG. 3] FIG. 3 is a software/data configuration diagram of an ATM control unit.
[FIG. 4] FIG. 4 is a firmware/data configuration diagram of a banknote processing unit.
[FIG. 5] FIG. 5 is a flowchart illustrating processing in accordance with the Embodiment 1.
[FIG. 6] FIG. 6 is a diagram illustrating the processing data flow in accordance with the Embodiment 1.
[FIG. 7] FIG. 7 is a management table for controlling connection states of devices and statuses of software.
[FIG. 8] FIG. 8 is a screen displaying result of recognition of an environment of the ATM.
[FIG. 9] FIG. 9 is a conceptual diagram of an Embodiment 2.
[FIG. 10] FIG. 10 is an overall configuration diagram of an automatic transaction system in accordance with the Embodiment 2.
[FIG. 11] FIG. 11 is a functional block diagram of an ATM in accordance with the Embodiment 2.
[FIG. 12] FIG. 12 is a software/data configuration diagram of a mobile terminal.
[FIG. 13] FIG. 13 is a software/data configuration diagram of a management server.
[FIG. 14] FIG. 14 is a list of items of stored data of an encryption key generation log stored in the management server.
[FIG. 15] FIG. 15 is a flowchart illustrating processing in accordance with the Embodiment 2.
[FIG. 16] FIG. 16 is a diagram illustrating data processing flow in accordance with the Embodiment 2.
[FIG. 17] FIG. 17 is a diagram illustrating an authentication screen displayed on a maintenance display unit in accordance with the Embodiment 2.
[FIG. 18] FIG. 18 is a diagram illustrating an authentication screen displayed on a mobile terminal in accordance with the Embodiment 2.
[FIG. 19] FIG. 19 is a diagram illustrating a response reception screen displayed on the mobile terminal in accordance with the Embodiment 2.
[FIG. 20] FIG. 20 is a diagram illustrating a response reception screen displayed on a maintenance display unit in accordance with the Embodiment 2.
[FIG. 21] FIG. 21 is an overall configuration diagram of an automatic transaction system (modified example).
[FIG. 22] FIG. 22 is a diagram illustrating an authentication screen displayed on the maintenance display unit (modified example).

### DESCRIPTION OF EMBODIMENTS

### (1) Embodiment 1

A technique called "challenge response authentication" is used as a mode of performing authentication regarding whether or not a communication partner is a valid partner. In this embodiment, a control unit (hereinafter referred to as "ATM control unit (AC)") of an automatic transaction device (hereinafter referred to as "ATM") carries out recognition of an environment of the ATM. Also, an internal device (DEV) specific to the ATM (hardware such as a banknote processing unit, a coin processing unit, a card reader, an encryption keypad, a receipt printer, a passbook printer, a journal printer, and a security camera) executes "challenge response authentication" between devices for the ATM control unit (AC). By virtue of the "challenge response authentication" between the devices, it is made possible to specify in advance a secret key, which is associated with the ATM control unit (AC), in the internal device (DEV) banknote processing unit. Thus, a communication encryption key that is encrypted by the ATM control unit (AC) is decrypted by the above secret key and it is thus made possible to allow only the ATM control unit (AC) and the internal device to share the above communication encryption key and perform encryption and decryption of the subsequent communications.

As typical "challenge response authentication" is authentication that can be realized by software and performed between a server and a device, authentication can be performed even when an authentication program is copied into an external terminal (for example, laptop PC) other than the ATM control unit (AC). In order to prevent authentication by the external terminal, the ATM control unit (AC) refers to a connection status of the internal device (DEV) and thereby carries out recognition of whether or not the operation environment is an environment in the ATM (environment recognition). More specifically, "challenge response authentication" between the devices will take place in contrast to typical "challenge response authentication." In this state, the ATM control unit (AC) transmits a response code (DEV RS) and the internal device (DEV) carries out verification of this response code (DEV RS). By virtue of the challenge response authentication of this kind between the ATM control unit (AC) and the internal device (DEV), it is made possible to carry out verification of the fact that the connection environment of the internal device (DEV) exists in the ATM. It should be noted that, although explanations are provided in the context of a case where the banknote processing unit is used as the internal device (DEV) in accordance with this embodiment, the same or similar processing can be performed on other internal devices (the coin processing unit, the card reader, the encryption keypad, the receipt printer, the passbook printer, the journal printer, the security camera, or the like).

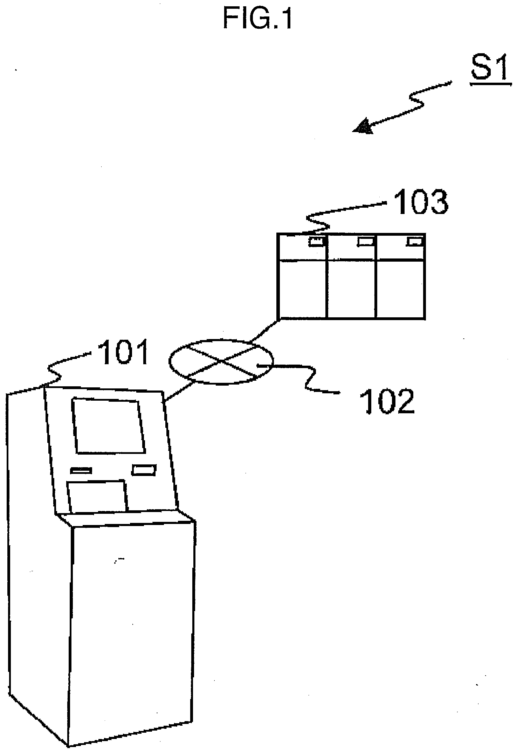

The first embodiment is described below with reference to FIGS. 1 to 8. FIG. 1 is an overall configuration diagram of the automatic transaction system. The automatic transaction system S1 is constituted by an ATM 101, a host computer 103 which is a host device, and a financial transaction network 102 interconnecting the ATM 101 and the host computer 103.

The ATM 101 is a device that carries out transactions such as deposit and withdrawal of cash through operation by a user. The financial transaction network 102 is, by way of example and not limited to, a local area network (LAN) or a wide area network (WAN). The host computer 103 is a computer connected to a plurality of the ATMs 101 and information regarding an account of the user of the ATM 101 and its balance and the like is recorded in the host computer 103.

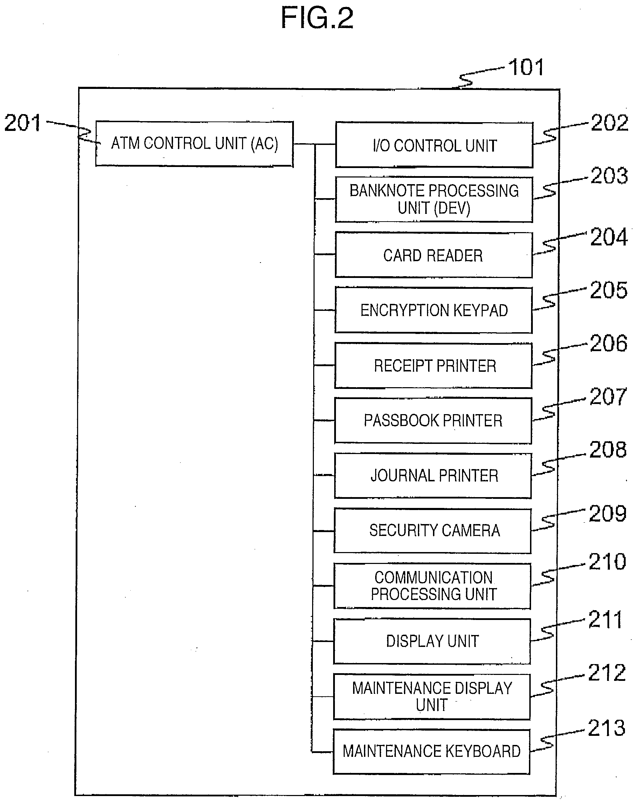

FIG. 2 is a functional block diagram of the ATM 101. The ATM 101 includes an ATM control unit (AC) 201 configured to control devices within the ATM; an I/O control unit 202 configured to control a display lamp of a front panel of the ATM and detect opening and closing of the front panel; a banknote processing unit 203 configured to handle banknotes to be deposited and banknotes to be withdrawn; a card reader unit 204 configured to read information of a card such as a cash card necessary for transactions by the ATM; an encryption keypad 205 for inputting a personal identification number for confirmation of identification for transactions by the ATM and for internally carrying out encryption for transmissions to the host computer 103; a receipt printer 206 configured to print an ATM receipt of the transaction(s); a passbook printer 207 configured to read and update a passbook; a journal printer 208 configured to record logs of ATM transactions; a security camera 209 for use in maintaining ATM security such as capturing a face photo of the ATM user; a communication processing unit 210 configured to perform communications with the host computer 103; a display unit 211 configured to display necessary information for the transactions for the ATM user; a maintenance display unit 212 configured to display information associated with maintenance of the ATM when a maintenance worker of the ATM performs maintenance work of the ATM; and a maintenance keyboard 213 configured to be operated by the maintenance worker to perform maintenance work of the ATM. In addition, the ATM 101 may include a coin processing unit (not shown) for handling deposited coins and coins to be withdrawn.

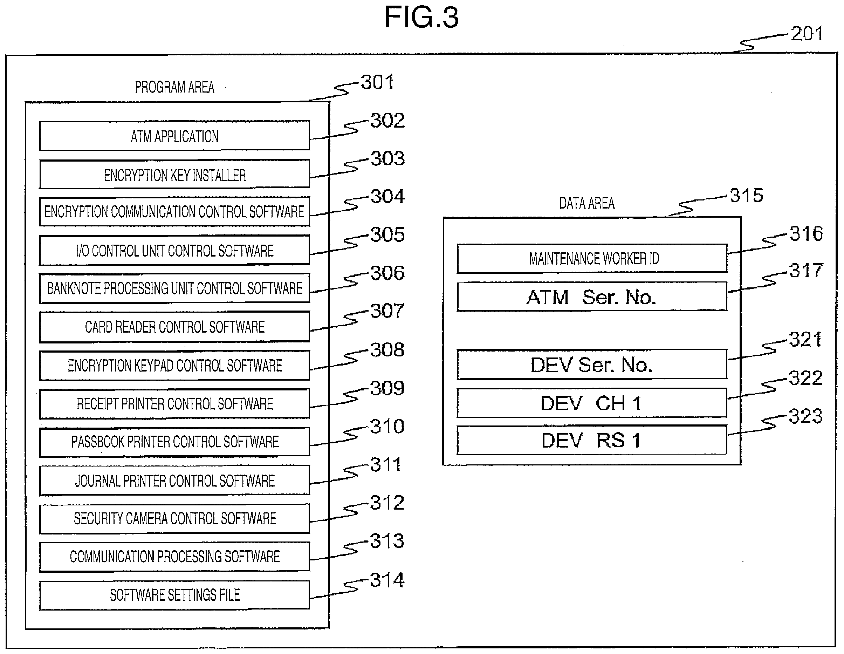

FIG. 3 is a diagram that illustrates a program/data configuration stored in a memory unit in the ATM control unit (AC) 201.

An ATM transaction application 302 that controls the entire ATM transaction, two types of software, i.e., pieces of software 303 and 304 each associated with encryption processing, nine types of device control software, i.e., pieces of device control software 305 to 313, and a settings file 314 associated with settings of a software environment are stored in the program area 301.

The encryption key installer 303 is software that is associated with generation of an encryption key necessary for encryption communication between the ATM control unit (AC) 201 and the banknote processing unit 203 and configured to perform verification regarding whether or not a secure environment necessary for generation of an encryption key is realized in the ATM. It should be noted that the encryption key installer 303 may be part of functions of software for maintenance of the ATM. The encryption communication control software 304 is software that carries out encryption communications with the internal device using an encryption key generated or specified by the encryption key installer 303. The pieces of device control software 305 to 313 are software corresponding to one of the functions 202 to 210, respectively.

Two types of data, i.e., pieces of data 316 and 317 relating to the ATM control unit (AC) 201 and pieces of data 321 to 323 relating to the banknote processing unit 203, are stored in the data area 315.

The maintenance worker ID 316 is a piece of information (an identification code) for identifying a worker who specifies an encryption key in the ATM. The ATM serial number (ATM Ser. No.) 317 is a piece of information for identifying the individual ATM, which may include a production serial number assigned by a so-called production line or lines, an identification number given by a financial institution independently of the production serial number so as to identify the ATM, or the like.

The internal device (DEV) serial number (DEV Ser. No.) 321 is a piece of information for identifying the banknote processing unit 203, which may include a production serial number assigned by a so-called production line or lines, an identification number given by a maintenance company independently of the production serial number, and the like. In addition, the internal device (DEV) serial number (DEV Ser. No.) 321 is transmitted from the banknote processing unit 203.

The DEV challenge code 1 (DEV CH 1) 322 is a piece of data that is transmitted from the banknote processing unit 203 along with the internal device (DEV) serial number (DEV Ser. No.) 321 and used by the banknote processing unit 203 to carry out challenge response authentication for the ATM control unit (AC) 201.

The DEV response code 1 (DEV RS 1) 323 is generated by the encryption key installer 303 based on the DEV challenge code 1 (DEV CH 1) 322 using a predetermined one-way conversion algorithm. In addition, the DEV response code 1 (DEV RS 1) 323 is generated so as to verify the validity of the banknote processing unit 203 for the ATM control unit (AC) 201.

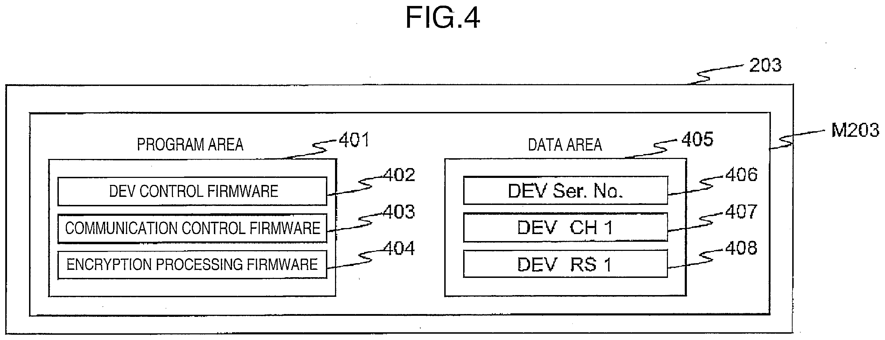

FIG. 4 is a diagram that illustrates the program/data configuration of the programs and the data stored in the memory unit M203 in the banknote processing unit 203.

Pieces of firmware, i.e., internal device (DEV) control firmware 402 configured to control transportation of banknotes of the banknote processing unit 203 or the like, communication control firmware 403 for performing communications with the ATM control unit (AC) 201, encryption processing firmware 404 for carrying out encryption of the communications between the ATM control unit (AC) 201 and the banknote processing unit 203, are stored in the program area 401.

Three types of data, i.e., pieces of data 406 to 408 are stored in the data area 405. The internal device serial number (DEV Ser. No.) 406 is a piece of information for identification of the banknote processing unit 203. The DEV challenge code 1 (DEV CH 1) 407 is generated when the banknote processing unit 203 carries out the challenge response authentication so as to verify the validity of the ATM control unit (AC) 201.

The internal device serial number (DEV Ser. No.) 406 and the DEV challenge code 1 (DEV CH 1) 407 are both transmitted to the ATM control unit (AC) 201. The DEV response code 1 (DEV RS 1) 408 is a piece of data used in the above-mentioned challenge response authentication. The DEV response code 1 (DEV RS 1) 408 is generated by the banknote processing unit 203 which is the internal device (DEV). In addition, the DEV response code 1 (DEV RS 1) 408 is a piece of data that is to be compared to determine whether or not it agrees with the DEV response code 1 (DEV RS 1) 323 transmitted from the ATM control unit (AC) 201.

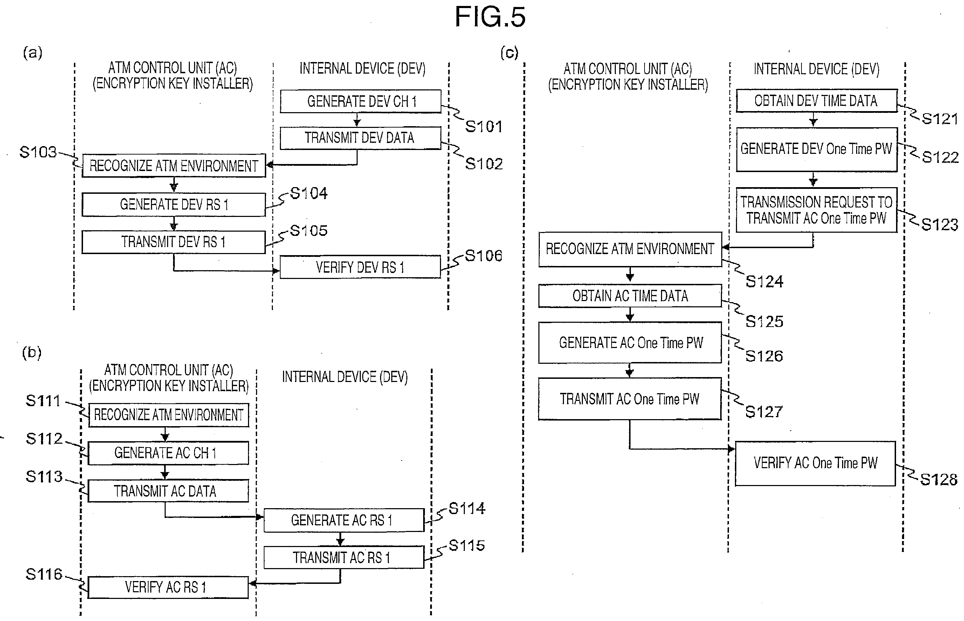

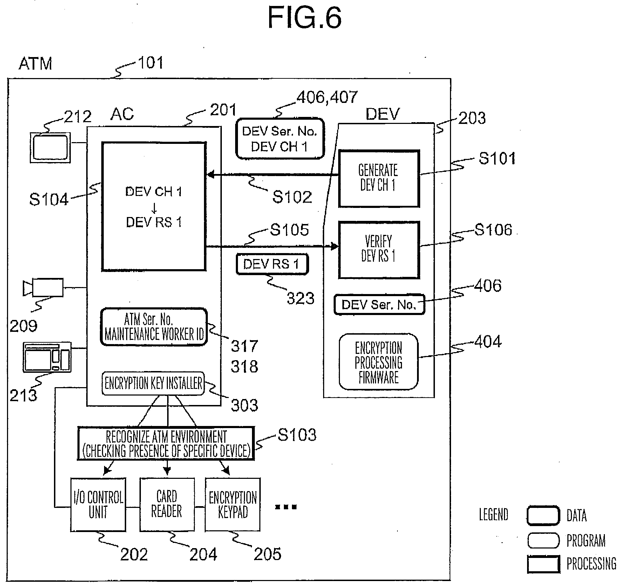

The flow of the entire processing in accordance with the first embodiment is described below with reference to FIGS. 5(a) and 6. A DEV challenge code 1 (DEV CH 1) 407 is generated by a predetermined random number generator of the encryption processing firmware 404 in the banknote processing unit 203 (S101). After that, when a predefined process occurs, for example, when pressing of a predetermined key displayed on the maintenance display unit 212 by a maintenance worker has been detected, the internal device serial number (DEV Ser. No.) 406 and the DEV challenge code 1 (DEV CH 1) 407 are transmitted to the ATM control unit (AC) 201 by the communication control firmware 403 (S102).

The internal device serial number (DEV Ser. No.) 406 and the DEV challenge code 1 (DEV CH 1) 407 are received by the ATM control unit (AC) 201, and the internal device (DEV) serial number (DEV Ser. No.) 321 and the DEV challenge code 1 (DEV CH 1) 322 in the data area 315 are respectively stored as well. Further, the internal device (DEV) serial number (DEV Ser. No.) 321 is registered in a log file such as an electronic journal as trace information regarding the encryption key generation. The encryption key generation status can be confirmed by referring to this log file when a problem such as encryption key leakage occurs. It is desirable that a security measure such as falsification prevention is implemented for this log file.

After that, the encryption key installer 303 carries out recognition of the environment of the ATM so as to perform verification regarding the fact that the environment in which the ATM control unit (AC) is operating exists not within an external terminal (typical laptop PC) but within the ATM 101 (S 103). For example, it is determined whether or not the I/O control unit 202, the card reader 204, the encryption keypad 205 and the like, which are devices specific to the ATM 101, are connected to the ATM control unit (AC) 201. The determination is performed, for example, by the ATM application 302 confirming, for each device, a response to the effect that activation of a device has been instructed and the device in fact has been activated. In addition, in order to increase accuracy of the recognition of the environment of the ATM, whether or not each device is properly operating may be determined by referring to installed software, environment setting parameters, error statuses of the device in addition to the simple determination of whether or not each device is connected.

In addition, as an example of the recognition of the environment of the ATM, it is also possible to perform verification regarding whether or not the program and settings within the ATM control unit (AC) 201 are valid, for example, by using an electronic signature and/or a predetermined tool.

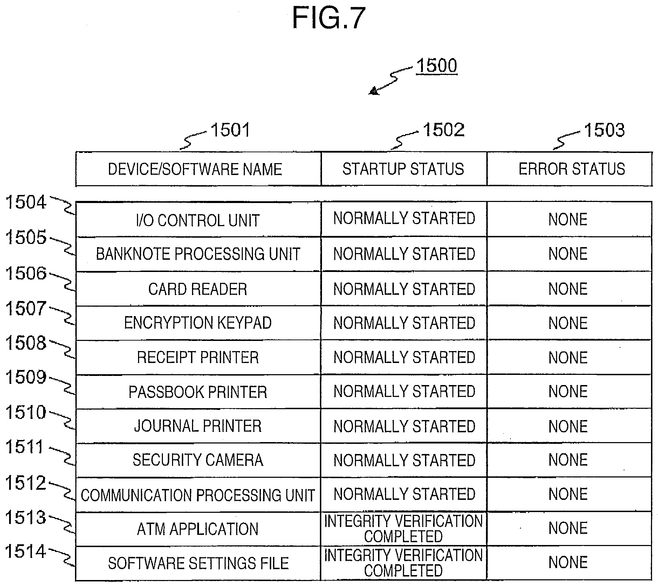

In the context of the recognition of the environment of the ATM of this kind, processing may be executed by using a management table 1500 for management of the connection states (startup status) of the devices and software statuses as illustrated in FIG. 7. Reference numeral 1501 denotes a device/software name of the device/software implemented within the ATM. Reference numeral 1502 denotes status data indicative of whether or not each device has been normally started. Reference numeral 1503 denotes data indicative of specific abnormal status such as an error code indicative of types of abnormality in the case where startup of each device is abnormal. The pieces of data 1504 to 1512 correspond to the operating states of the I/O control unit control software 305, the banknote processing unit control software 306, the card reader control software 307, the encryption keypad control software 308, the receipt printer control software 309, the passbook printer control software 310, the journal printer control software 311, the security camera control software 312, and the communication processing software 313 as illustrated in FIG. 3, respectively. In addition, although the piece of data 1513 corresponds to an integrity verification state of the ATM application 302 as illustrated in FIG. 3, the integrity verification states of the encryption key installer 303 or the encryption communication control software 304 may be included therein. In addition, the piece of data 1514 corresponds to an integrity verification state of the software settings file 314 illustrated in FIG. 3. Here, "integrity verification" as used herein refers to processing of performing verification regarding the fact that there is no falsification nor destruction of data.

At this point, in the process of the ATM being started, the connection states (startup statuses) of the individual devices are stored in advance in the management table 1500. In addition, in the course of the recognition of the environment of the ATM, the encryption key installer 302 refers to this table and confirms whether or not each device is normally started or whether or not the integrity of each piece of software has been verified.

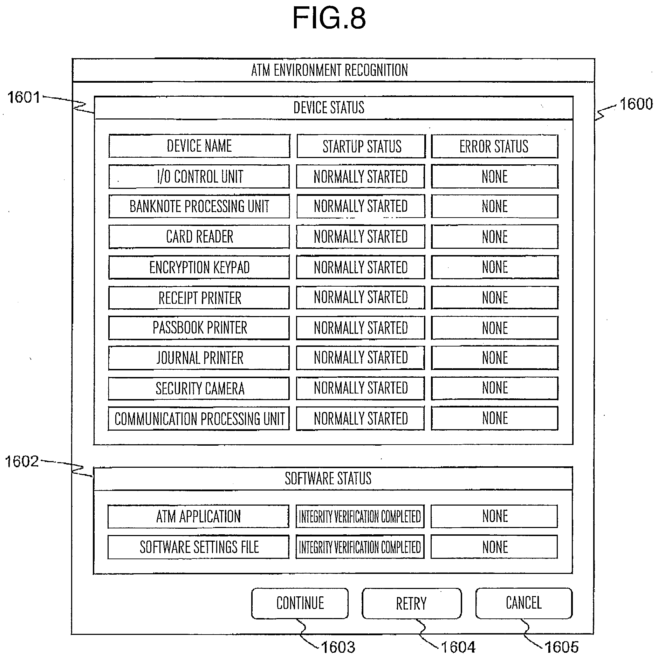

The result of the recognition of the environment of the ATM is displayed on the maintenance display unit 212. FIG. 8 is an example of the result screen indicating the ATM environment recognition. The result screen 1600 of the ATM environment recognition includes a device status area 1601 configured to display the statuses of devices, a software status area 1602 configured to display the statuses of software, a "Continue" key 1603, a "Retry" key 1604, and a "Cancel" key 1605.

Pieces of data corresponding to the pieces of data 1504 to 1512 illustrated in FIG. 7 are displayed in the device status area 1601. In addition, pieces of data corresponding to pieces of data 1513 and 1514 illustrated in FIG. 7 are displayed in the software status area 1602.

When the connection states (startup statuses) of the individual data are normal and pressing of the "Continue" key 1603 by the maintenance worker has been detected, the next step and the steps after that of the processing are executed. Meanwhile, when abnormal data has been detected, it is necessary to confirm the states of the relevant device or devices and software by the maintenance worker. After that, when the pressing of the "Retry" key 1604 by the maintenance worker has been detected, the environment recognition is executed again. Meanwhile, the processing is stopped when abnormal data has been detected and the pressing of the "Cancel" key 1605 by the maintenance worker has been detected. It is desirable that the "Continue" key 1603 is not to be displayed and the pressing of the "Continue" key 1603 is not to be detected when the abnormal data has been detected.

When the recognition of the environment of the ATM was not successful, the ATM control unit (AC) 201 determines that the environment is not a valid ATM environment and records the result of unsuccessful recognition of the environment of the ATM in the log file. It is desirable that this log file is protected against falsification by encryption or the like. After that, the ATM control unit (AC) 201 transmits data indicative of the fact that the environment is not a valid ATM environment to the banknote processing unit 203. The banknote processing unit 203 receives this data.and records the fact that the environment is not a valid ATM environment. It is also possible to implement further security measures. For example, when the cumulative number of times of recording the fact that the environment is not a valid ATM environment or the number of times of consecutive recording of the fact that the environment is not a valid ATM environment has exceeded a predetermined value, it may be determined that an unauthorized access is made not from the ATM but from an external terminal (laptop PC or the like) to block the encryption key generation of the banknote processing unit 203.

When the recognition of the environment of the ATM has been successful, the DEV response code 1 (DEV RS 1) 323 is generated from the internal device (DEV) serial number (DEV Ser. No.) 321 and the DEV challenge code 1 (DEV CH 1) 322 (S104). The generated DEV response code 1 (DEV RS 1) 323 is transmitted to the banknote processing unit 203 (S105).

When the banknote processing unit 203 has received the DEV response code 1 (DEV RS 1) 323, the banknote processing unit 203 generates a DEV response code 1 (DEV RS 1) 408 from an internal device serial number (DEV Ser. No.) 406 and a DEV challenge code 1 (DEV CH 1) 407 using a predetermined conversion algorithm. Here, the "predetermined conversion algorithm" as used herein refers to a conversion algorithm that is identical to the conversion algorithm for generating the DEV response code 1 (DEV RS 1) 323 from the internal device (DEV) serial number (DEV Ser. No.) 321 and the DEV challenge code 1 (DEV CH 1) 322 of the ATM control unit (AC) 201.

Next, the banknote processing unit 203 performs verification regarding whether or not the received DEV response code 1 (DEV RS 1) 323 agrees with the generated DEV response code 1 (DEV RS 1) 408 (S106).

In this manner, the conversion algorithm in the banknote processing unit 203 is shared by the ATM control unit (AC) 201. As a result, whether or not the internal device serial number (DEV Ser. No.) 406 has been registered in the log file of the ATM control unit (AC) 201 is allowed to be confirmed on the side of the banknote processing unit 203 by verifying the agreement of the DEV response code 1 (DEV RS 1) 323 with the DEV response code 1 (DEV RS 1) 408. By virtue of this verification, the banknote processing unit 203 determines that the environment is a secure ATM operation environment and thereafter executes the encryption key generation processing when an encryption key generation command is subsequently received.

Here, it is also possible that an upper time limit may be specified for the period after the banknote processing unit 203 having determined that the environment is a secure ATM operation environment and until reception of the encryption key generation command. By specifying the time limit, the risk of any third party transmitting an encryption key generation command to the banknote processing unit 203 which is an internal device (DEV) and illegally generating an encryption key can be avoided even when the maintenance worker leaves the site while operating the ATM 101.

When the received DEV response code 1 (DEV RS 1) 323 does not agree with the generated DEV response code 1 (DEV RS 1) 408, then the banknote processing unit 203, determining that there is not an appropriate environment for generating an encryption key, rejects the processing even when an encryption key generation command is subsequently received. It should be noted that the processing may be executed again starting from the step S101 as long as the frequency of the disagreement of the DEV response code 1 (DEV RS 1) 323 with the DEV response code 1 (DEV RS 1) 408 does not exceed a predetermined number of times. In this case, when the disagreement occurs exceeding the predetermined number of times, then the banknote processing unit 203, determining that an unauthorized access is being made to the banknote processing unit 203, rejects the processing of the step S101 for a predetermined period of time. In addition, in addition to rejection of the processing, communications between the ATM control unit (AC) and the banknote processing unit 203 may be blocked.

In accordance with the first embodiment, the ATM control unit (AC), which is a communication partner that communicates with internal devices, carries out the environment recognition to recognize the fact that the operation environment of the software that generates the encryption key is not an environment existing in an external terminal but an environment existing in the ATM. More specifically, the ATM control unit (AC) refers to the connection status of the internal device and transmits the response code (DEV RS) thereto, and the internal device verifies it, and thus the connection environment of the internal device is verified. Thus, it is made possible to perform verification regarding the fact that the software that generates the encryption key does not operate on external terminals different than the ATM in a case where the encrypted communication is to be carried out or in a case where an encryption key is to be newly specified for the automatic transaction device for which no encryption key is specified.

In addition, even when the encryption key is internally generated inside of hardware using secure hardware such as a secure chip having tamper resistance, it is effective to confirm that the environment is a secure environment. When the encryption key is to be internally generated inside of the hardware, access control needs to be provided for sending an encryption key generation command. In that case, password authentication or the like is used in the access control. When leakage of the password occurs, for example, a secret key and a public key are generated inside of the hardware without any permission to do so and the public key may be unnecessarily taken out of the hardware. Thus, unintended extraction of the encryption key leads to vulnerability and accordingly security of the environment is important even in the case of hardware.

It should be noted in the context of this embodiment that the DEV response code 1 (DEV RS 1) 323 is generated in the step S104 from two pieces of information, i.e., the internal device (DEV) serial number (DEV Ser. No.) 321 and the DEV challenge code 1 (DEV CH 1) 322 in order to make it possible for the banknote processing unit 203 to perform verification regarding whether or not the internal device serial number (DEV Ser. No.) 406 has been recorded in the log file of the ATM control unit (AC) 201. However, if the registration of the ATM control unit (AC) 201 into the log file does not need to be confirmed by the banknote processing unit 203 through the response code verification of the step S106, then the DEV response code 1 (DEV RS 1) 323 may be generated in the step S104 from one single piece of information, i.e., the DEV challenge code 1 (DEV CH 1) 322. In that case, the verification in the step S106 will proceed in the same or similar manner such that the DEV response code 1 (DEV RS 1) 408 is generated from one single piece of information, i.e., the DEV challenge code 1 (DEV CH 1) 407.

In addition, this embodiment has been described based on the example where the DEV response code 1 (DEV RS 1) is verified by the internal device (DEV). Meanwhile, for example, when there is a possibility of an unauthorized internal device (DEV) being connected, then the response code may be generated and verified by the ATM control unit (AC).

In this case, as illustrated in FIG. 5(b), the ATM control unit (AC) 201 at the beginning executes the processing of performing verification regarding the fact that the operation environment exists in the above-described automatic transaction device (S111). When it has been determined that the above-described operation environment exists in the above-mentioned automatic transaction device, the ATM control unit (AC) 201 generates the AC challenge code 1 (AC CH 1) (S 112) and transmits the AC serial number (AC Ser. No.) and the AC challenge code 1 (AC CH 1) to the internal device (DEV) (S113). After that, the internal device (DEV) generates the AC response code 1 (AC RS 1) from the AC serial number (AC Ser. No.) and the AC challenge code 1 (AC CH 1) (S 114) and transmits it to the ATM control unit (AC) 201 (S115). The DEV response code 1 (DEV RS 1) 323 is generated (S104). The generated DEV response code 1 (DEV RS 1) 323 is transmitted to the internal device (DEV) (S105). Finally, the ATM control unit (AC) 201 performs verification regarding whether or not the AC response code 1 (AC RS 1) received from the internal device (DEV) agrees with the AC response code 1 (AC RS 1) that has been generated in the ATM control unit (AC) 201 from the received AC response code 1 (AC RS 1), the AC serial number (AC Ser. No.), and the AC challenge code 1 (AC CH 1) (S116). In the above explanation, an example has been presented where the AC serial number (AC Ser. No.) and the AC challenge code 1 (AC CH 1) are transmitted together and the AC response code 1 (AC RS 1) is generated from both of them. Meanwhile, it may also be envisaged that only the AC challenge code 1 (AC CH 1) is transmitted to generate the AC response code 1 (AC RS 1) from the AC challenge code 1 (AC CH 1).

Although this embodiment has been described based on the example of challenge response authentication using the challenge code and the response code between the ATM control unit (AC) and the internal device (DEV), it should be noted that this embodiment may rely on other authentication schemes. For example, a scheme that relies on a one-time password (One Time PW) which is a password that can be used only once may be mentioned. Whilst there may be more than one one-time password scheme, one scheme is described with reference to FIG. 5(c), for example, according to which the time is shared by the authenticating party and the party to be authenticated and passwords that corresponds to this time are generated by the both parties using the same appropriate algorithm to verify these passwords. It should be noted as a premise here that a clock is implemented in the internal device (DEV) as well.

First, the internal device (DEV) refers to an embedded clock and obtains time data (S 121). A one-time password (DEV One Time PW) is generated from the obtained time data using an appropriate algorithm (S122). After that, the internal device (DEV) transmits to the ATM control unit (AC) a request to transmit the AC one-time password (AC One Time PW) (S123).

The encryption key installer 303 of the ATM control unit (AC) carries out the recognition of the environment of the ATM on the basis of the same or similar procedure as that in the step S103 (S124). When the recognition of the environment of the ATM has been successful, the encryption key installer 303 refers to the clock embedded in the ATM control unit (AC) 201 and obtains the time data (AC time data) (S125). The encryption key installer 303 then generates the one-time password (AC One Time PW) from the obtained time data using the same algorithm as that of the internal device (DEV) (S126) and transmits the AC one-time password (AC One Time PW) to the internal device (DEV) (S127). The internal device (DEV) performs verification regarding whether or not the DEV one-time password (DEV One Time PW) and the AC one-time password (AC One Time PW) agree with each other (S128) and executes processing such as execution of the encryption key generation processing according to the result of the verification.

In this manner, it is made possible for the internal device (DEV) to authenticate the ATM control unit (AC) 201 by using the one-time password scheme using the shared time data.

### (2) Embodiment 2

A second embodiment is described below with reference to FIGS. 2, 4, and 9 to 20.

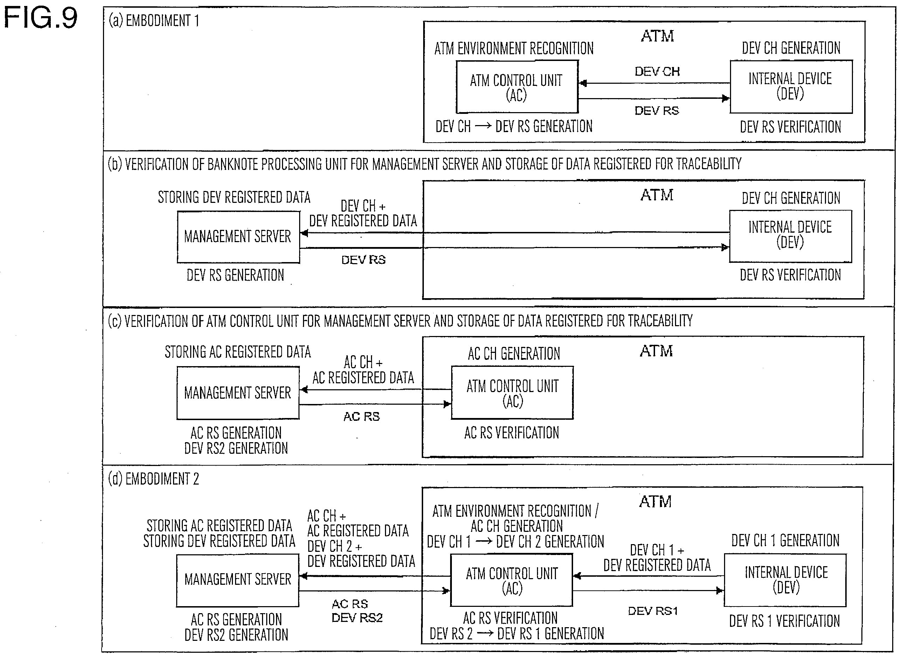

FIG. 9 is a diagram that illustrates the concept of the second embodiment and, more specifically, the basic approach to the processing procedures in accordance with the second embodiment.

For example, when an ATM is stored in a maintenance warehouse (in other words, when the ATM is not operating), pieces of software necessary for its operation can be copied onto the ATM control unit (AC), which makes it possible to generate an encryption key in this state. In this case, where the ATM is not operating, when the configuration of the software is changed and memory dump is performed in response to an encryption key being generated, then the encryption key is fraudulently acquired.

In order to prevent such an unauthorized action, it is necessary to make further verification of whether or not the ATM is currently operating in addition to the verification regarding the fact that the connection environment of the internal device (DEV) exists in the ATM (see the section (a)) which has been described in the context of the first embodiment. The fact that the ATM is connected to the host computer serves as a basis for determining that the ATM is currently operating. However, when an encryption key is to be specified into an ATM, the ATM is operated in a maintenance mode which is a mode different than the operation mode in which normal transactions are carried out. As a consequence, the ATM is often disconnected from the host computer, so that it is difficult to perform verification regarding the fact that the ATM is a currently operating ATM on the basis of the communication state between the ATM 101 and the host computer 103. For this reason, it is necessary to make a determination by means other than checking connection to the host computer 103 in order to determine that the ATM is a currently operating ATM.

In view of the above, as illustrated in the section (b), the following processing may be envisaged: The internal device (DEV) transmits information necessary for traceability of encryption key generation (the serial number of the internal device (DEV), the serial number of the ATM, date, worker ID, etc.) to the management server installed outside of the ATM and this information is stored by the management server. If unauthorized encryption key generation occurs, tracking of the person who made the fraudulent behavior can be achieved using this traceability information, which makes it possible to prevent unauthorized encryption key generation using an ATM that is not currently operated.

Whether or not the information necessary for the traceability of the encryption key generation has been successfully stored in the management server is verified by the internal device (DEV) using the challenge response authentication. For example, the management server generates a response code from the challenge code generated by the internal device and the information necessary for traceability using a predetermined conversion algorithm such as a one-way function. When the internal device (DEV) can correctly verify the response code transmitted from the management server, then it is made possible to confirm the fact that the information necessary for the traceability of the encryption key generation has been successfully registered in the management server.

In this manner, when verification is made by the internal device (DEV) regarding the fact that the information that is necessary in terms of traceability has been successfully registered in the management server, it is made possible to confirm, regardless of whether the maintenance mode is entered or not, the fact that the connection to the currently operating ATM is established.

In addition, it is necessary at the time of generation of an encryption key to perform verification regarding the fact that not only the internal device (DEV) but also the ATM control unit (AC) resides in the environment of a currently operating ATM. In view of the above, as illustrated in the section (c), a possible processing will be as follows: The ATM control unit (AC) also transmits the information necessary for the traceability of the encryption key generation to the management server installed outside of the ATM and this information is stored by the management server. In addition, verification regarding the fact that the information necessary for the traceability of the encryption key generation has been successfully stored in the management server is made by the ATM control unit (AC) using the challenge response authentication.

Combination of the concepts that have been described in the above sections (a) to (c) makes it possible to trance a problematic ATM by referring to history information registered in the authentication server in the event of illegal leakage of the encryption key, as a result of which it is made possible to prevent fraudulent behaviors caused by illegal encryption key generation. More specifically, it is made possible for the internal device to accurately perform verification regarding the fact that it is connected to the currently operating ATM using the information indicative of the fact that the ATM control units (AC) illustrated in the sections (a) and (c) are one and the same one and the management servers illustrated in the sections (b) and (c) are one and the same management server and the valid communication partners. In this embodiment, the configuration and processing to achieve (d) which is the concepts that have been described in the sections (a) to (c) is described in detail below.

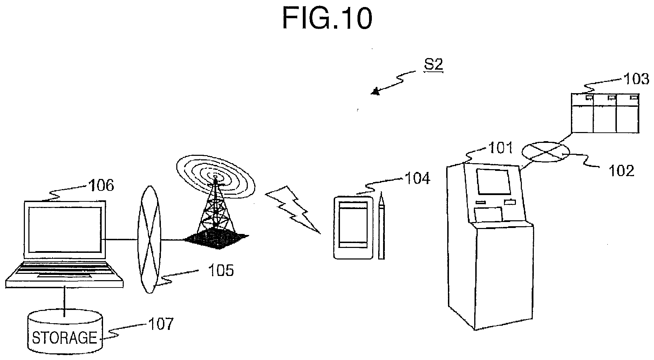

FIG. 10 is an overall configuration diagram of the automatic transaction system. The automatic transaction system S2 includes, in addition to the ATM 101, the financial transaction network 102, and the host computer 103, which are described in the context of the first embodiment, a mobile information terminal 104, a maintenance network 105 which is another network different than the financial transaction network 102, a management server 106, and a storage unit 107. The ATM 101 is connected via the mobile information terminal 104 to the maintenance network 105 to exchange information with the management server 106. The storage unit 107 is a storage unit that is connected to the management server 106 and configured to store trace information of the encryption key generation. The trace information is transmitted via the mobile information terminal 104 from the ATM 101.

Since the functional block diagram of the ATM 101 is the same as that of the first embodiment (see FIG. 2), detailed description thereof is omitted.

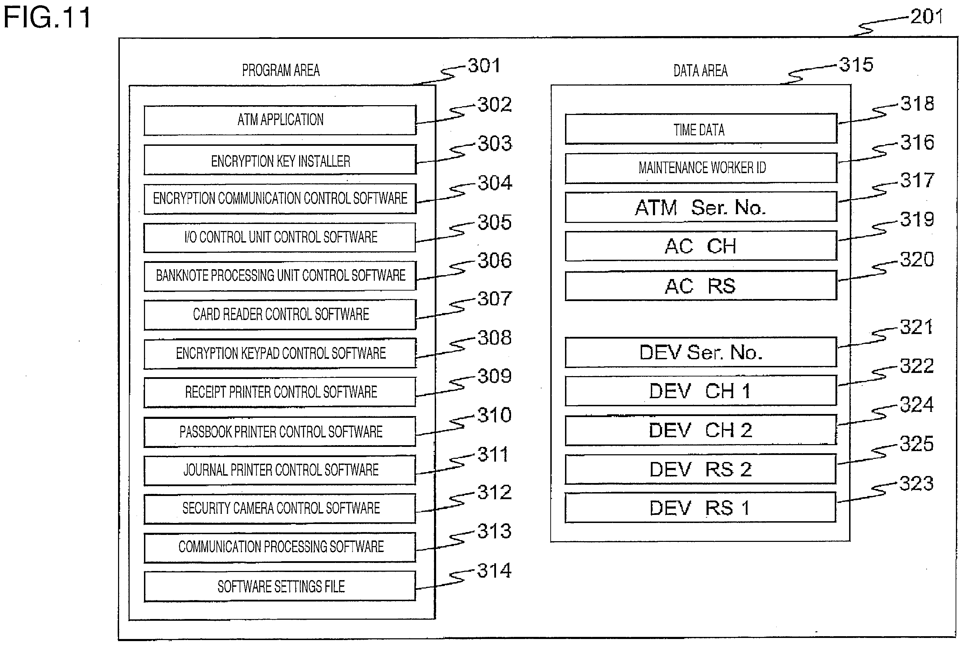

FIG. 11 is a diagram that illustrates the program/data configuration of the programs and data stored in the memory unit in the ATM control unit (AC) 201. The program area 301 is the same as that in the first embodiment and accordingly detailed description thereof is omitted.

Two types of data, i.e., pieces of data 316 to 320 associated with the ATM control unit (AC) 201 and pieces of data 321 to 325 associated with the internal device (DEV) are stored in the data area 315.

The time data 318 is a piece of data indicative of the time at which the data is transmitted to the management server 106. The maintenance worker ID 316 is an identification code to identify the worker who specifies the encryption key in the ATM. The ATM serial number (ATM Ser. No.) 317 is a piece of information for identifying individual ATMs, which may include a production serial number assigned by a so-called production line or lines, an identification number given by a financial institution independently of the production serial number so as to identify an ATM, or the like.

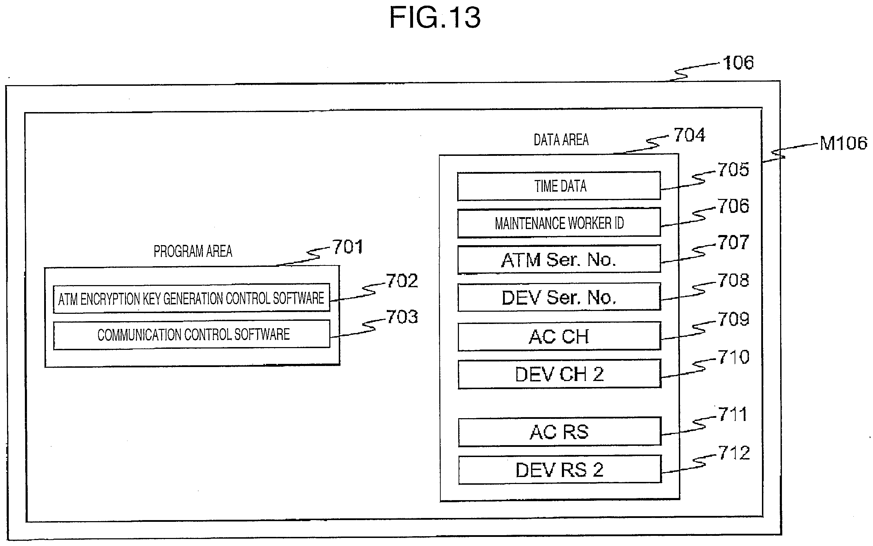

An AC challenge code (AC CH) 319 is generated to carry out the challenge response authentication when the ATM control unit (AC) 201 verifies the validity of the management server 106. More specifically, the AC challenge code (AC CH) 319 is generated for the ATM control unit (AC) 201 to authenticate the management server 106 and perform verification regarding whether or not the registered data for traceability has been successfully stored by the management server 106. An AC response code (AC RS) 320 is a piece of data that is used in the challenge response authentication and generated by the ATM control unit (AC) 201. In addition, the AC response code (AC RS) 320 is a piece of data that is to be compared to determine whether or not it agrees with the AC response code (AC RS) 711 transmitted from the management server 106 (see FIG. 13).

An internal device (DEV) serial number (DEV Ser. No.) 321 is apiece of information for identifying the banknote processing unit 203, which may include a production serial number assigned by a so-called production line or lines, an identification number given by a maintenance company independently of the production serial number, and the like. In addition, the internal device (DEV) serial number (DEV Ser. No.) 321 is transmitted from the banknote processing unit 203 and transmitted to the management server 106 as part of the trace information of the encryption key generation.

A DEV challenge code 1 (DEV CH 1) 322 is a piece of data that is transmitted from the banknote processing unit 203 along with the internal device (DEV) serial number (DEV Ser. No.) 321 and used by the banknote processing unit 203 to carry out challenge response authentication for the ATM control unit (AC) 201. In addition, the DEV challenge code 1 (DEV CH 1) 322 is also used by the banknote processing unit 203 when the banknote processing unit 203 performs verification regarding the fact that the internal device (DEV) serial number (DEV Ser. No.) 321 has been successfully transmitted to the management server 106.

A DEV response code 1 (DEV RS 1) 323 is generated by the encryption key installer 303 based on a DEV response code 2 (DEV RS 2) 324, which will be described later, using a predetermined one-way conversion algorithm. In addition, the DEV response code 1 (DEV RS 1) 323 is generated so as to verify the validity of the banknote processing unit 203 for both of the ATM control unit (AC) 201 and the management server 106. Further, it is made possible by the DEV response code 1 (DEV RS 1) 323 to perform verification regarding the fact, as the encryption key trace information, that the internal device (DEV) serial number (DEV Ser. No.) 321 has been successfully delivered to the management server 106.

The DEV challenge code 2 (DEV CH 2) 324 is generated by the encryption key installer 303 through performing one-way conversion from the DEV challenge code 1 (DEV CH 1) 322. In addition, the DEV challenge code 2 (DEV CH 2) 324 is used by the banknote processing unit 203 when the validity of the management server 106 is verified, and transmitted to the management server 106 along with the internal device (DEV) serial number (DEV Ser. No.) 321. It should be noted that the data transmitted to the management server 106 is not limited to the above data but any data may be transmitted as long as it is data that contributes to tracing of the encryption key generation.

A DEV response code 2 (DEV RS 2) 325 is a response code generated by the management server 106. More specifically, the DEV response code 2 (DEV RS 2) 325 is generated on the management server 106 through appropriate one-way conversion from two pieces of data, i.e., the banknote processing unit production serial number 321 and the DEV challenge code 1 (DEV CH 1). The DEV response code 2 (DEV RS 2) 325 is generated by the banknote processing unit 203 to verify the validity of the management server 106.

The configuration of the programs and data stored in the memory unit in the banknote processing unit 203 are the same as those of the first embodiment (see FIG. 4) and accordingly detailed description thereof is omitted.

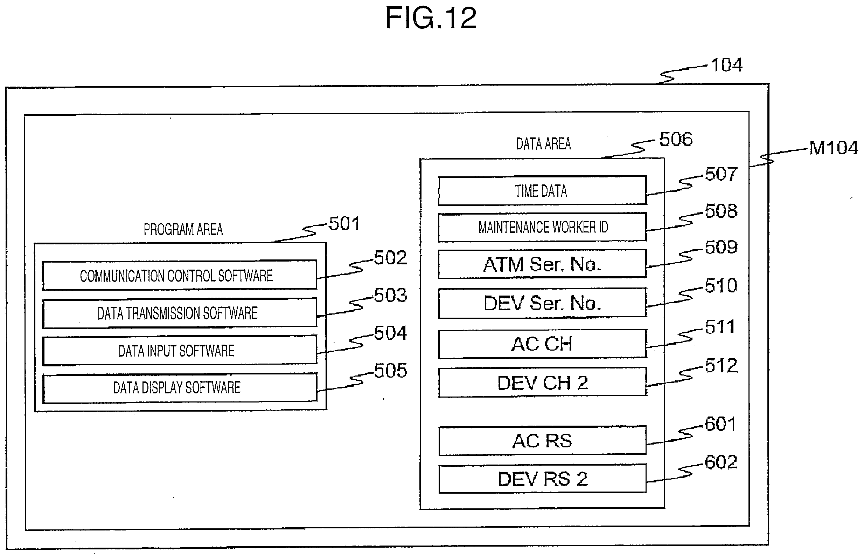

FIG. 12 is a diagram that illustrates the program/data configuration of the programs and data stored in a memory unit M104 in the mobile terminal 104. These programs and data are used in transmission and reception of input/output data from/to the ATM 101 to/from the management server 106.

Four types of software, i.e., pieces of software 502 to 505 are stored in the program area 501. The communication control software 502 is software for performing communications via the wireless network 105. The data transmission software 503 is software for transmitting data to the management server 106, for example, short message or electronic mail software. The data input software 504 is software for inputting data displayed on the maintenance display unit 212 of the ATM 101 into the mobile terminal 104, for example, software for reading a two-dimensional code. The data display software 505 is software for converting the format of representation of data so as to input the information of the mobile terminal 104 to the ATM 101, for example, software for performing generation and indication of a bar code and/or a two-dimensional code.

Pieces of data to be transmitted to the management server 106 and pieces of data to be received from the management server 106 are stored in the data area 506. More specifically, pieces of data to be displayed on the maintenance display unit 212 of the ATM 101, loaded into the mobile terminal 104, and transmitted to the management server 106 and pieces of data to be received from the management server 106 and input to the ATM 101 are stored therein.

Specifically, eight types of data, i.e., the pieces of data 507 to 512, 601, and 602 are stored in the data area 506. The time data 507, the maintenance worker ID 508, the ATM serial number (ATM Ser. No.) 509, the internal device (DEV) serial number (DEV Ser. No.) 510, the AC challenge code (AC CH) 511, and the DEV challenge code 2 (DEV CH 2) 512 are pieces of data that correspond to the pieces of data 318, 316, 317, 321, 319, and 324 stored in the data area 315 of the ATM control unit (AC) 201, respectively. In addition, the AC response code (AC RS) 601 and the DEV response code 2 (DEV RS 2) 602 correspond to the pieces of data 320 and 325 stored in the data area 315 of the ATM control unit (AC) 201, respectively.

FIG. 13 is a diagram that illustrates the program/data configuration of the programs and data stored in a memory unit M106 in the management server 106.

Two types of software, i.e., pieces of software 702 and 703 are stored in the program area 701. The ATM encryption key generation control software 702 is software for generating the AC response code (AC RS) and the DEV response code 2 (DEV RS 2) from the log management of the ATM encryption key generation, the received AC challenge code (AC CH), and the DEV challenge code 2 (DEV CH 2) and storing encryption key trace information in the storage unit 107. The communication control software 703 is software for performing communications with the mobile terminal 104 via the network 105.

Eight types of data, i.e., pieces of data 705 to 712 are stored in the data area 704 as data to be stored as a log. Among these pieces of data, the time data 705, the maintenance worker ID 706, the ATM serial number (ATM Ser. No.) 707, the internal device (DEV) serial number (DEV Ser. No.) 708, the AC challenge code (AC CH) 709, and the DEV challenge code 2 (DEV CH 2) 710 are pieces of data received from the mobile terminal 104 and correspond to the pieces of data 507 to 512, respectively.

The AC response code (AC RS) 711 is a piece of data generated by the ATM encryption key generation control software 702. When generating the AC response code (AC RS) 711, the ATM encryption key generation control software 702 executes appropriate one-way conversion processing (hash computation, etc.) using the time data 705, the maintenance worker ID 706, the ATM serial number (ATM Ser. No.) 707, and the AC challenge code (AC CH) 709 that have been input.

The DEV response code 2 (DEV RS 2) 712 is a piece of data generated by the ATM encryption key generation control software 702 in the same or similar manner as the AC response code (AC RS) 711. When generating the DEV response code 2 (DEV RS 2) 712, the ATM encryption key generation control software 702 executes appropriate one-way conversion processing (hash computation, etc.) using the internal device (DEV) serial number (DEV Ser. No.) 708 and the DEV challenge code 2 (DEV CH 2) 710 that have been input.

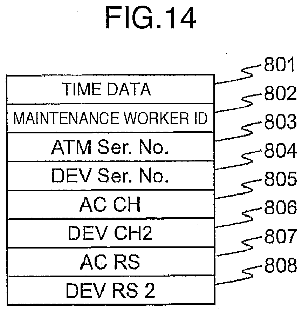

FIG. 14 is a diagram that illustrates the names of the data items of the encryption key generation log (trace information) to be stored in the storage unit 107. The items 801 to 808 correspond to the pieces of data 705. to 712 stored in the memory unit M106 in the management server 106, respectively.

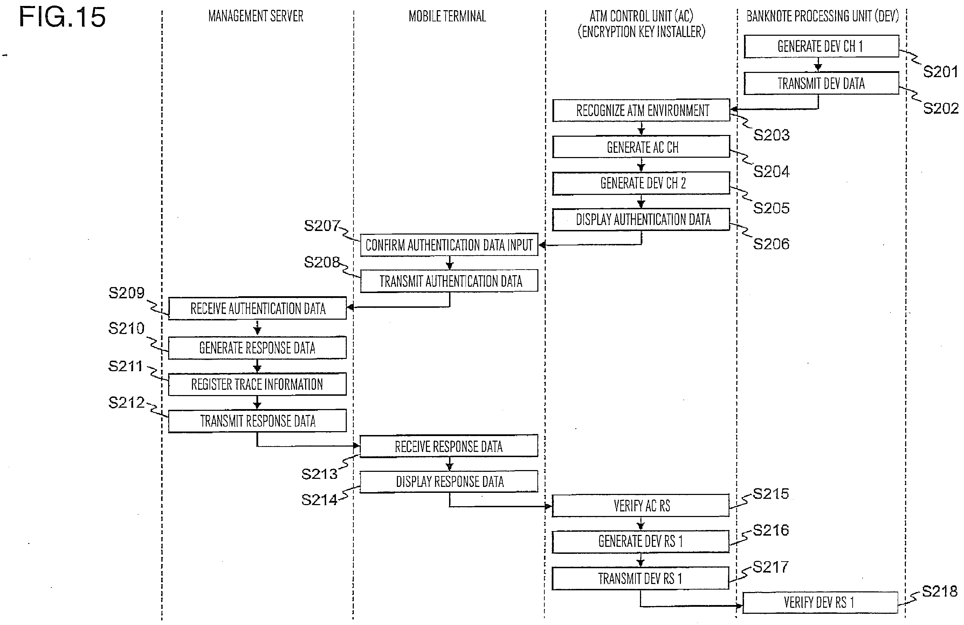

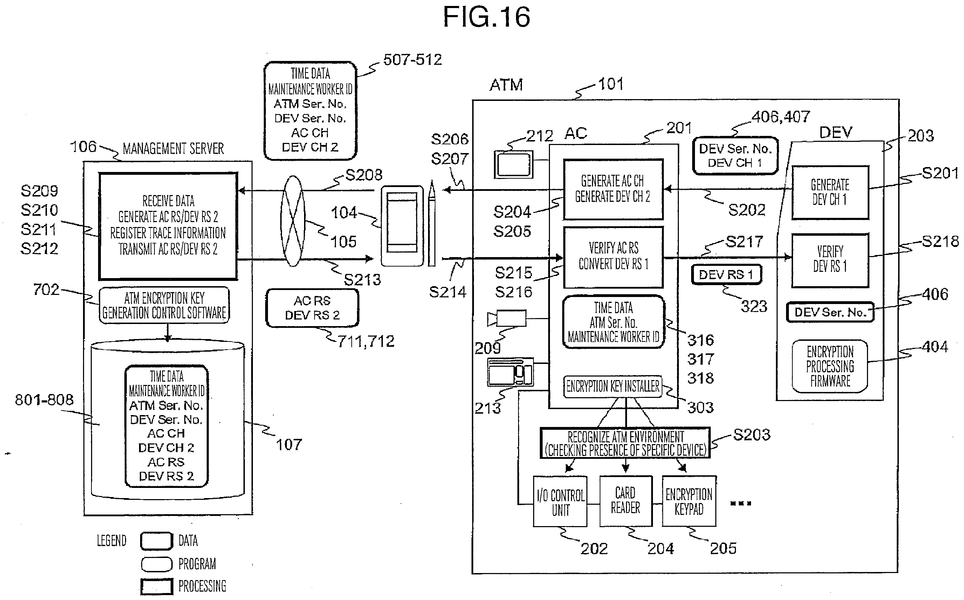

The flow of the overall processing in accordance with the second embodiment is described below with reference to FIGS. 15 and 16. The DEV challenge code 1 (DEV CH 1) 407 is generated by the banknote processing unit 203 using a predetermined random number generator of the encryption processing firmware 404 (S201). After that, for example, when a predefined processing has occurred such as detection of pressing of the predetermined key displayed on the maintenance display unit 212 by the maintenance worker, then the internal device serial number (DEV Ser. No.) 406 and the DEV challenge code 1 (DEV CH 1) 407 are transmitted to the ATM control unit (AC) 201 by the communication control firmware 403 (S202). The ATM control unit (AC) 201 receives the internal device serial number (DEV Ser. No.) 406 and the DEV challenge code 1 (DEV CH 1) 407 and stores them respectively as the internal device (DEV) serial number (DEV Ser. No.) 321 and the DEV challenge code 1 (DEV CH 1) 322 in the data area 315. After that, the encryption key installer 303 carries out the recognition of the environment of the ATM so as to perform verification regarding the fact that the environment in which the ATM control unit (AC) is operating exists not in an external terminal (typical laptop PC, etc.) but inside of the ATM 101 (S203).

The processing steps S201 to S203 are the same or similar ones as the processing steps S101 to S103 in the first embodiment. Meanwhile, in the case of the second embodiment, it is also possible to confirm that the ATM is an ATM that is normally operating by making a determination by the ATM application 302 of whether or not the ATM 101 and the host computer 103 are interconnected via the financial transaction network 102. When an encryption key is to be specified in the ATM 101, it is necessary to activate the ATM 101 in the maintenance mode and stop providing normal transaction service. When the maintenance mode is entered, it is generally not possible to determine whether or not the ATM 101 and the host computer 103 are interconnected. In such a case, data including time such as an electronic journal included in the log data in the ATM 101 may be referred to for confirmation of the fact that the ATM is the one that is connected to the host computer 103 and normally operating.

The processing in the event of unsuccessful ATM environment recognition proceeds in the same or similar manner as in the first embodiment and accordingly explanation thereof is omitted.

When the recognition of the environment of the ATM has been successful, the AC challenge code (AC CH) 319 is generated using a predetermined random number generator (S204). After that, the DEV challenge code 2 (DEV CH 2) 324 is generated from the DEV challenge code 1 (DEV CH 1) 322 using a predetermined conversion algorithm (S205). It is assumed here that the conversion algorithm is shared by the ATM control unit (AC) 201 and the banknote processing unit 203. For example, the internal device serial number (DEV Ser. No.) 406, which is a piece of data transmitted from the banknote processing unit 203 to be registered in the management server 106, may be used as one of the inputs to the conversion algorithm.

After that, the maintenance worker ID 316, the ATM serial number (ATM Ser. No.) 317, the time data 318, the AC challenge code (AC CH) 319, the internal device (DEV) serial number (DEV Ser. No.) 321, and the DEV challenge code 2 (DEV CH 2) 324 are displayed on the maintenance display unit 212 as the data for management server authentication (S206).

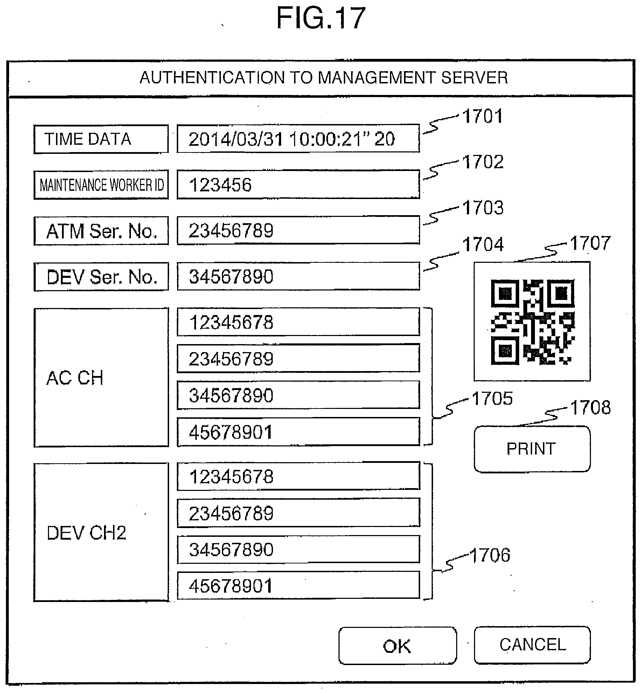

An example of the authentication screen for the management server displayed on the maintenance display unit 212 is illustrated in FIG. 17. The elements 1701 to 1706 correspond to the time data 318, the maintenance worker ID 316, the ATM serial number (ATM Ser. No.) 317, the internal device (DEV) serial number (DEV Ser. No.) 321, the AC challenge code (AC CH) 319, and the DEV challenge code 2 (DEV CH 2) 324 illustrated in FIG. 11, respectively. The element 1707 is a two-dimensional code that stores information on the elements 1701 to 1706. In this manner, presentation to the maintenance display unit 212 may be code-based presentation such as a bar code or a two-dimensional code as well as text-based presentation as long as they can be read by a predetermined reader. Thus, the maintenance worker is allowed to input the management server authentication data to the mobile terminal 104 he/she has at hand. It should be noted that the management server authentication data may be output to an external unit outside of the ATM 101 in any manner other than the wireless manner.

In addition, when it is difficult to read the two-dimensional code 1707 displayed on the maintenance display unit 212 using a reading device of the mobile terminal due to bad conditions such as outside light, then the processing may be continued by reading a two-dimensional code printed by a printer. In this case, when the "Print" key indicated in the element 1708 has been pressed, the two-dimensional code is printed using any one of the printing units implemented in the ATM. Further, the management server authentication data may be output to an external unit outside of the ATM 101 by wireless communication or the like.

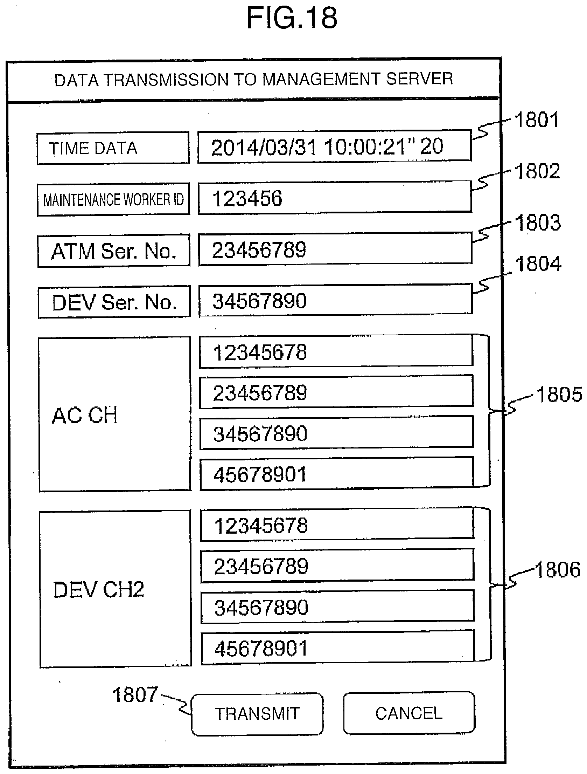

The mobile terminal 104 confirms the fact that the management server authentication data has been input and stores the above-mentioned information in the pieces of data 507 to 512 in the data area 506 (S207). With regard to the input of the management server authentication data to the mobile terminal 104, code information displayed on the maintenance display unit 212 of the ATM 101 may be read, for example, by a bar code reader and/or a two-dimensional code reader when the data input software 504 includes these readers. An example of display of the authentication screen for the management server displayed on the display unit of the mobile terminal 104 is illustrated in FIG. 18. The elements 1801 to 1806 correspond to the time data 318, the maintenance worker ID 316, the ATM serial number (ATM Ser. No.) 317, the internal device (DEV) serial number (DEV Ser. No.) 321, the AC challenge code (AC CH) 319, and the DEV challenge code 2 (DEV CH 2) 324 illustrated in FIG. 11 (more specifically, the elements 1701 to 1706 illustrated in FIG. 17), respectively.

After that, when pressing of the "Transmit" key 1807 has been detected, the data transmission software 503 transmits the pieces of data 507 to 512 via the communication network 105 to the management server 106 (S208).

The management server 106 receives the pieces of data 507 to 512 transmitted from the mobile terminal 104 and stores them using the ATM encryption key generation control software 702 as the pieces of data 705 to 710 on the data area 704 (S209). After that, the ATM encryption key generation control software 702 generates the AC response code (AC RS) 711 from the time data 705, the maintenance worker ID 706, the ATM serial number (ATM Ser. No.) 707, and the AC challenge code (AC CH) 709 using a predetermined conversion algorithm. Likewise, the ATM encryption key generation control software 702 generates the DEV response code 2 (DEV RS 2) 712 from the internal device (DEV) serial number (DEV Ser. No.) 708 and the DEV challenge code 2 (DEV CH 2) 710 using a predetermined conversion algorithm (S210).

The predetermined conversion algorithm may be configured, for example, as a function that combines the challenge code (AC CH, DEV CH2) and other input data and subjecting the combination to a predetermined one-way conversion function to generate a response code. In this manner, the ATM control unit (AC) 201 verifying the response code and the banknote processing unit 203 are allowed to confirm the fact that the transmitted data has been successfully delivered to the management server 106 by using a conversion algorithm shared between the management server 106 and the ATM control unit (AC) 201 or between the management server 106 and the banknote processing unit 203 and including the challenge code and the other input data in the course of generation of the response code (AC RS, DEV RS 2).

The ATM encryption key generation control software 702 stores the data received from the mobile terminal 104 and the generated two types of response codes in the storage unit 107 as the encryption key generation log (trace information) illustrated in FIG. 14 (S211). After that, the ATM encryption key generation control software 702 transmits the AC response code (AC RS) 711 and the DEV response code 2 (DEV RS 2) 712 to the mobile terminal 104 (S212).

When data identical to all or part of the pieces of data 507 to 512 transmitted from the mobile terminal 104 is repeatedly received by the management server 106 in a predetermined period of time while the processing steps S209 to S212 are executed, then it is determined that the an unauthorized access has been made to the management server 106, the ATM 101, or the banknote processing unit 203 and transmission of data to the mobile terminal 104 is stopped. More specifically, an upper limit is specified for the number of times of consecutive reception of the data identical to all or part of the pieces of data 507 to 512 transmitted from the mobile terminal 104 or the number of times of its reception in a predetermined period of time. When the upper limit has been exceeded, this fact is recorded in the storage unit 107 and a warning is issued for an administrator of the management server 106. Alternatively, it is also possible to include information indicative of the fact that an unauthorized access has been made in the AC response code (AC RS) 711 and the DEV response code 2 (DEV RS 2) 712. Thus, the ATM control unit (AC) 201 which has received the response code and the banknote processing unit 203 are allowed to determine that an unauthorized access has been made to the management server 106. As a result, it is made possible to determine that an appropriate ATM operation environment is not established (or it has been detected the ATM control unit (AC) and the banknote processing unit are subjected to an attack) to reject the subsequent encryption key generation processing.

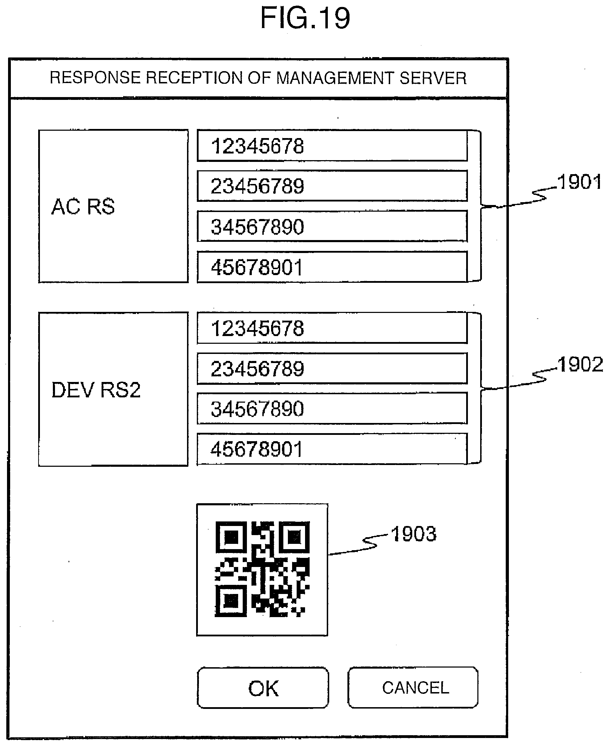

When the mobile terminal 104 has received the AC response code (AC RS) 711 and the DEV response code 2 (DEV RS 2) 712, the mobile terminal 104 stores these response codes as the AC response code (AC RS) 601 and the DEV response code 2 (DEV RS 2) 602 of the data area 506 (S213). After that, the data display software 505 displays the (element) 601 and the DEV response code 2 (DEV RS 2) 602 on the display unit of the mobile terminal, for example, in the form of a bar code, a two-dimensional code, or a text (S214). An example of display of the response reception screen of the management server displayed on the display unit of the mobile terminal is illustrated in FIG. 19. The elements 1901 and 1902 correspond to the AC response code (AC RS) 711 and the DEV response code 2 (DEV RS 2) 712 illustrated in FIG. 13, respectively. The element 1903 is a two-dimensional code that stores the information of the elements 1901 and 1902.

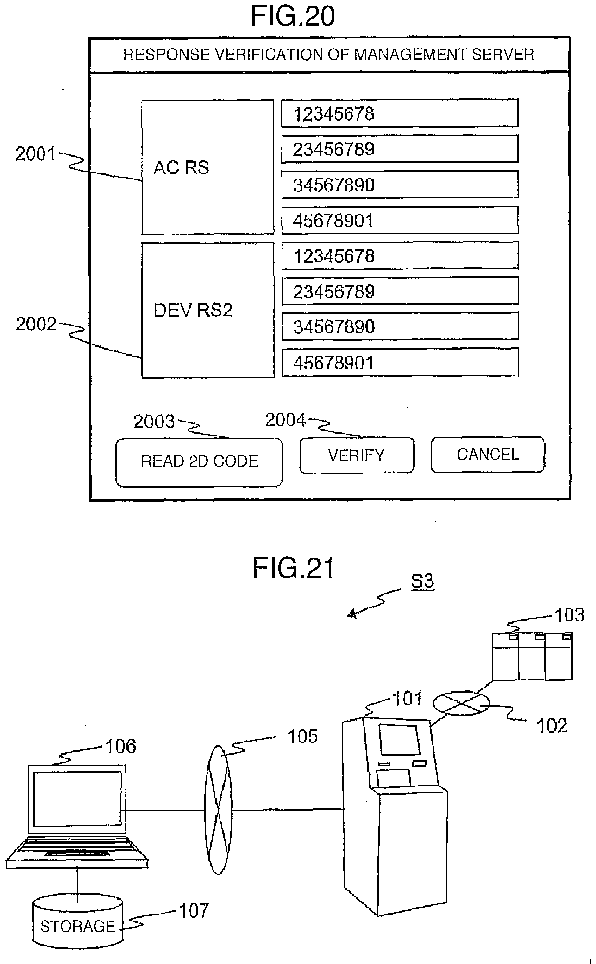

The displayed bar code or two-dimensional code is read by the security camera 209, the text is entered by the maintenance worker through the maintenance keyboard 213, and the results are displayed on the maintenance display unit 212. An example of display of the response reception screen of the management server displayed on the maintenance display unit 212 is illustrated in FIG. 20. The elements 2001 and 2002 correspond to the AC response code (AC RS) 711 and the DEV response code 2 (DEV RS 2) 712 illustrated in FIG. 13 (more specifically, illustrated in (the elements) 1901 and 1902 illustrated in FIG. 19), respectively. A "Read 2D code" key 2003 is a key for reading the two-dimensional code 1903 displayed on the display unit of the mobile terminal 104 by the security camera 209. The element 2004 is a key for verifying the AC response code (AC RS).

With regard to the response codes (AC RS, DEV RS 2) that have been sent from the management server, validity of the AC response code (AC RS) is verified by the ATM control unit (AC) 201. Specifically, when pressing of the "Verify" key 2004 has been detected, the encryption key installer 303 verifies validness of the AC response code (AC RS) 320 using the conversion algorithm identical to that which has been described in the context of the step S210 (S215). More specifically, it is verified whether or not the AC response code (AC RS) 320 which has been generated by inputting the pieces of data 316 to 319 into the conversion algorithm agrees with the AC response code 601 which has been received from the mobile terminal 104. Thus, the ATM control unit (AC) 201 is allowed to perform verification regarding the fact that the communication partner is the appropriate management server 106 and confirm the fact that the transmitted registered data has been successfully stored in the management server.

When they do not agree with each other, it is determined that failure in the communication of the mobile terminal 104 and/or erroneous operation by the maintenance worker have occurred so as to urge the maintenance worker to confirm the occurrence of the erroneous operation. As a result, when the AC response code (AC RS) 1901 and the DEV response code 2 (DEV RS 2) 1902 of the response reception screen of the management server of the mobile terminal 104 illustrated in FIG. 19 agree with the AC response code (AC RS) 2001 and the DEV response code 2 (DEV RS 2) 2002 of the response reception screen of the management server of the ATM illustrated in FIG. 20, then it is determined that what has occurred is not an erroneous operation but communication failure. In addition, the processing step S206 (or S208) and the subsequent steps are executed again in order to transmit the pieces of data 316 to 319, 321, and 324 again to the management server 106.

In addition, when the AC response code (AC RS) 601 cannot be obtained due to communication failure or the like, transition is made to a temporary encryption key generation state. More specifically, a mode is entered that generates an encryption key necessary for encryption communication between the ATM control unit (AC) 201 and the banknote processing unit 203 in the subsequent processing in the same or similar manner as in the case where the validity of the AC response code (AC RS) 320 is correctly verified. Meanwhile, it is necessary that a time to live (TTL) is specified for the generated encryption key and the appropriate AC response code (AC RS) 601 is input to the encryption key installer 303 during the TTL. When the appropriate AC response code (AC RS) 601 is not input during the TTL, then the generated encryption key becomes invalid and the encryption key installer 303 changes settings so that the encryption communication between the ATM control unit (AC) 201 and the banknote processing unit 203 is prohibited.

When the processing step S215 is completed, the encryption key installer 303 uses a predetermined conversion algorithm and generate a DEV response code 1 (DEV RS 1) 323 from the DEV response code 2 (DEV RS 2) 325 (S216). This conversion algorithm is shared by the ATM control unit (AC) 201 and the banknote processing unit 203. In addition, the conversion algorithms for generating the DEV response code 1 (DEV RS 1) 323 may be changed according to whether or not transition has been made to the above-described temporary encryption key generation state. In addition, the generated DEV response code 1 (DEV RS 1) 323 is transmitted to the banknote processing unit 203 (S217).

When the banknote processing unit 203 has received the DEV response code 1 (DEV RS 1) 323, the banknote processing unit 203 generates a DEV response code 1 (DEV RS 1) 408 from an internal device serial number (DEV Ser. No.) 406 and a DEV challenge code 1 (DEV CH 1) 407 using a predetermined conversion algorithm. In addition, the banknote processing unit 203 performs verification regarding whether or not the received DEV response code 1 (DEV RS 1) 323 agrees with the DEV response code 1 (DEV RS 1) 408 (S218).

Here, the "predetermined conversion algorithm" as used herein refers to an algorithm constituted by combining three conversion algorithms, i.e., (1) the conversion algorithm for generating the DEV challenge code 2 (DEV CH 2) 324 from the DEV challenge code 1 (DEV CH 1) 322 of the ATM control unit (AC) 201; (2) the conversion algorithm for generating the DEV response code 2 (DEV RS 2) 712 from the internal device (DEV) serial number (DEV Ser. No.) 708 and the DEV challenge code 2 (DEV CH 2) 710 in the management server 106; and (3) the conversion algorithm for generating the DEV response code 1 (DEV RS 1) 323 from the DEV response code 2 (DEV RS 2) 325 of the ATM control unit (AC) 201.

In this manner, the conversion algorithm of the banknote processing unit 203 is partly shared by the ATM control unit (AC) 201 and the management server 106. As a result, whether or not the internal device serial number (DEV Ser. No.) 406 has been registered in the storage unit 107 of the management server 106 via the ATM control unit (AC) 201 is allowed to be confirmed on the side of the banknote processing unit 203 by verifying the agreement of the DEV response code 1 (DEV RS 1) 323 with the DEV response code 1 (DEV RS 1) 408. By virtue of this agreement verification, the banknote processing unit 203 determines that the environment is a secure ATM operation environment and thereafter executes the encryption key generation processing when an encryption key generation command is subsequently received.

Here, it is also possible that an upper time limit may be specified for the period after the banknote processing unit 203 having determined that the environment is a secure ATM operation environment and until reception of the encryption key generation command. By specifying the time limit, the risk of any third party transmitting an encryption key generation command to the banknote processing unit 203 and generating an encryption key without authorization to do so can be avoided even when the maintenance worker leaves the site while operating the ATM.

When the DEV response code 1 (DEV RS 1) 323 and the DEV response code 1 (DEV RS 1) 408 do not agree with each other, then the banknote processing unit 203, determining that the regarding that the environment is not an environment appropriate for generation of the encryption key, rejects the processing even when an encryption key generation command is subsequently received. Alternatively, when it has been determined that failure occurred in the communications of the network 105 by the fact that (the elements represented by) 1901 and 1902 of the response reception screen of the management server of the mobile terminal 104 agree with (the elements represented by) 2001 and 2002 of the response reception screen of the management server of the ATM, respectively, or when it has been determined that erroneous operation by the maintenance worker has occurred, the processing step of S201 and the subsequent steps are executed again if the number of times of occurrence is below a predetermined number of times. When the predetermined number of times has been exceeded, then it is assumed that an unauthorized access has been made to the banknote processing unit 203, and re-execution of the processing of the step S201 and the subsequent steps is rejected for a predetermined period of time.

When the ATM control unit (AC) 201 is in the state of temporary encryption key generation, the DEV response code 1 (DEV RS 1) 323 is generated by a conversion algorithm in accordance with this state. As a consequence, the banknote processing unit 203 generates the DEV response code 1 (DEV RS 1) 408 using this conversion algorithm. In addition, the banknote processing unit 203 performs verification regarding whether or not the DEV response code 1 (DEV RS 1) 408 agrees with the DEV response code 1 (DEV RS 1) 323. If they agree with each other, the banknote processing unit 203 determines that the temporary encryption key generation state is entered and, after that, generates an encryption key in response to reception of the encryption key generation command.

When an unauthorized access to the management server 106 has been detected, then this information is included in the DEV response code 1 (DEV RS 1) 408. Accordingly, it is made possible to confirm occurrence of the unauthorized access to the management server 106 by the banknote processing unit 203 verifying presence or absence of this information. In that case, the banknote processing unit 203 determines that the environment is not an operation environment of an appropriate ATM (or it has been detected that the ATM control unit (AC) and/or the banknote processing unit are subjected to an attack) and rejects the encryption key generation processing for an indefinite period or a predetermined period of time even when an encryption key generation command is subsequently received.

This embodiment has been described on the premise that the management server (the management server illustrated in FIG. 9(b)) which is the communication partner of the banknote processing unit 203 and the management server (the management server illustrated in FIG. 9(c)) which is the communication partner of the ATM control unit (AC) 201 are one and the same management server in a case where an encryption key is newly specified for an automatic transaction device for which no encryption key is specified. Meanwhile, they may be configured as different management servers. In this case, the processing will proceed as follows: The banknote processing unit 203 transmits the information via the ATM control unit (AC) 201 to the management server illustrated in FIG. 9(b) (more specifically, the management server connected to the banknote processing unit 203).

Although this embodiment has been described on the premise that communications with the management server external to the ATM are performed, it should be noted that an encryption keypad inside of the ATM may be used in place of the management server. Since the encryption keypad has the function of performing communications with the host computer 103, whether or not this ATM is a currently operating ATM may be determined based on presence or absence of communications between the encryption keypad and the host.

In addition, although this embodiment has been described on the premise that the ATM 101 and the host computer 103 are often disconnected from each other in the maintenance mode, the ATM 101 and the host computer 103 may be interconnected.

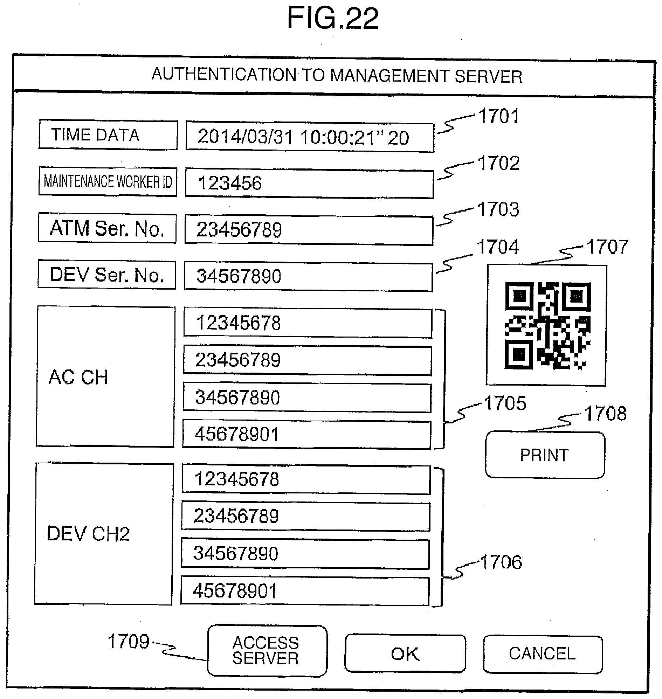

In addition, although the automatic transaction system S2 that includes the mobile terminal 104 has been described in this embodiment, the automatic transaction system S3 may be configured as illustrated in FIG. 21 such that the ATM 101 and the management server 106 are both connected to the maintenance network 105. In this context, as illustrated in FIG. 22, an access key 1709 to access the management server may be additionally provided on the authentication screen for the management server. The screen configured in this manner makes it possible to execute transmission and reception of information between the ATM 101 and the management server 106 even when no mobile terminal is provided.

### REFERENCE SIGNS LIST

101: automatic transaction device; 102: financial transaction network; 103: host computer; 104: mobile information terminal; 105: maintenance network; 106: management server, 107: storage unit; 201: ATM control unit (AC); 203: banknote processing unit as an internal device (DEV); 318, 507, 705: time data; 316, 508, 706: maintenance worker ID; 317, 509, 707: ATM serial number (ATM Ser. No.); 319, 511, 709: AC challenge code (AC CH); 320, 601, 711: AC response code (AC RS), 321, 406, 510, 708: internal device (DEV) serial number (DEV Ser. No.); 322, 407: DEV challenge code 1 (DEV CH 1); 323, 408: DEV response code 1 (DEV RS 1); 324, 512, 710: DEV challenge code 2 (DEV CH 2); 325, 602, 712: DEV response code 2 (DEV RS 2)

## Claims

1. An automatic transaction device comprising:
a first device mounted internally; and
a control unit configured to control devices, wherein transmission and reception of data are performed between the first device and the control unit,
the first device being configured to execute
a process of generating a first code relating to the first device, and
a process of performing verification of the first code and a second code received from the control unit and generating an encryption key in accordance with a result of the verification, and
the control unit being configured to execute
a process of performing verification regarding the fact that an operation environment exists in the automatic transaction device after reception of the first code and
a process of generating the second code and transmitting the second code to the first device in response to it having been determined that the operation environment exists in the automatic transaction device.

2. The automatic transaction device as set forth in claim 1, wherein the control unit is configured to carry out a process of generating the second code from the first code.

3. The automatic transaction device as set forth in claim 1, wherein the control unit is configured to execute
a process of generating a third code from the first code, generating a fourth code relating to the control unit, and outputting the third code and the fourth code, and
a process of verifying a fifth code generated by a server from the fourth code, and generating the second code from the sixth code generated from the third code by the server in accordance with the result of the verification.

4. The automatic transaction device as set forth in claim 1, wherein the first device is selected from the group consisting of a banknote processing unit configured to handle a banknote, a coin processing unit configured to handle a coin, a card reader unit configured to read information of a card, an encryption keypad configured to perform encryption, a receipt printer configured to print an ATM receipt, a passbook printer configured to read and update a passbook, a journal printer configured to record a transaction log, and a camera configured to capture a face photo of a user.

5. The automatic transaction device as set forth in claim 1, further comprising a second device mounted internally, the second device being different than the first device, wherein the process of performing verification regarding the fact that the operation environment exists in the automatic transaction device comprises a process of executing a determination of whether or not the second device is connected to the control unit.

6. The automatic transaction device as set forth in claim 5, wherein the first device and the second device are each selected from the group consisting of an I/O control unit, a banknote processing unit configured to handle a banknote, a coin processing unit configured to handle a coin, a card reader unit configured to read information of a card, an encryption keypad configured to perform encryption, a receipt printer configured to print an ATM receipt, a passbook printer configured to read and update a passbook, a journal printer configured to record a transaction log, and a camera configured to capture a face photo of a user.

7. The automatic transaction device as set forth in claim 1, wherein, in response to it having been determined that the operation environment does not exist in the automatic transaction device,
the control unit transmits data indicative of the fact that the operation environment does not exist in the automatic transaction device, and
the first device stops encryption key generation processing in accordance with a number of times of reception of data indicative of the fact that the operation environment is not within the automatic transaction device.

8. The automatic transaction device as set forth in claim 1, wherein the first device is configured to execute a process of transmitting information specific to the first device to the control unit, and
the control unit is configured to use the information specific to the first device in executing the process of generating the first code.

9. The automatic transaction device as set forth in claim 8, wherein the first device is configured to execute, in the process of verifying the second code received from the control unit, a process of comparing the received second code with a second code generated by the first device from the first code and the information specific to the first device.

10. An automatic transaction device comprising:
a first device mounted internally; and
a control unit configured to control devices, wherein transmission and reception of data are performed between the first device and the control unit,
the control unit being configured to execute:
a process of verifying the fact that an operation environment exists in the automatic transaction device,
a process of generating the first code and transmitting the first code to the first device in response to it having been determined that the operation environment exists in the automatic transaction device,
a process of performing verification of the first code and the second code, and
a process of generating an encryption key in accordance with a result of the verification of the second code, and
the first device being configured to execute
a process of generating the first challenge second code; and
a process of generating the second code from the second code and transmitting the second code to the control unit.

11. An automatic transaction device comprising:
a first device mounted internally;
a control unit configured to control devices; and
a display unit configured to display information relating to maintenance, wherein transmission and reception of data are performed between the first device and the control unit, the display unit being configured to display a first code generated from a code relating to the first device by the control unit and a second code relating to the control unit in response to the control unit having determined that an operation environment exists in the automatic transaction device.

12. The automatic transaction device as set forth in claim 11, wherein the display unit is configured to display
a third code generated by the server and verified by the control unit and
a fourth code generated by the server and used in generation of the second code by the control unit in accordance with a result of verification of the third code.

13. An automatic transaction system comprising:
an automatic transaction device that includes a first device mounted inside of the automatic transaction system, a control unit configured to control devices, and a display unit configured to display information relating to maintenance, wherein transmission and reception of data are performed between the first device and the control unit;
a mobile terminal; and
a server,
the first device being configured to execute
a process of generating a first code relating to the first device and transmitting the first code to the control unit, and
a process of performing verification of a second code received from the control unit and generating an encryption key in accordance with a result of the verification, the control unit being configured to execute
a process of verifying the fact that an operation environment exists in the automatic transaction device after reception of the first code,
a process of generating a third code from the first code and generating a fourth code relating to the control unit, and displaying information relating to the third code and the fourth code on the display unit in response to it having been determined that the operation environment exists in the automatic transaction device,
a process of reading information relating to a fifth code and a sixth code displayed on the mobile terminal, and
a process of performing verification of the fifth code and generating the second code from the sixth code in accordance with a result of the verification, and transmitting the second code to the first device,
the mobile terminal being configured to execute
a process of reading and transmitting information relating to the third code and the fourth code displayed on the display unit,
a process of receiving the fifth code and the sixth code transmitted from the server, and
a process of displaying information relating to the fifth code and the sixth code,and
the server being configured to execute
a process of generating the sixth code from the third code and
a process of generating the fifth code from the fourth code.

14. The automatic transaction system as set forth in claim 13, wherein the control unit is configured to execute
a process of displaying, along with the information associated with the third code and the fourth code, data indicative of a time at which the information is transmitted, identification information identifying a worker, and identification information identifying the automatic transaction device or identification information identifying the first device,
the mobile terminal is configured to execute
a process of reading and transmitting the data indicative of the time at which the information is transmitted, the identification information identifying the worker, and the identification information identifying the automatic transaction device or the identification information identifying the first device displayed on the display unit, and
the server is configured to execute
a process of storing, in a storage unit, the information associated with the third code and the fourth code, the data indicative of the time at which the information is transmitted, the identification information identifying the worker, and the identification information identifying the automatic transaction device or the identification information identifying the first device.
